(19) **Europäisches Patentamt European Patent Office Office européen des brevets**

(11) **EP 3 162 706 B1**

(12) **FASCICULE DE BREVET EUROPEEN**

(45) Date de publication et mention
de la délivrance du brevet:
**21.03.2018 Bulletin 2018/12**

(51) Int Cl.:
***B64C 27/22*** *(2006.01)* ***B64C 27/59*** *(2006.01)*
***B64C 13/28*** *(2006.01)*

(21) Numéro de dépôt: **16189142.9**

(22) Date de dépôt: **16.09.2016**

(54) **COMBINATEUR DES COMMANDES VOL EN LACET ET DE POUSSEE POUR UN HELICOPTERE HYBRIDE**

GIERWINKEL- UND SCHUB-BEFEHLSEINGABEKOMBINATOR FÜR HYBRIDHELIKOPTER

COMBINER OF YAW AND THRUST COMMANDS FOR A HYBRID HELICOPTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.10.2015 FR 1502168**

(43) Date de publication de la demande:
**03.05.2017 Bulletin 2017/18**

(73) Titulaire: **Airbus Helicopters
13725 Marignane Cedex (FR)**

(72) Inventeurs:
• **BIHEL, Jean-Romain
13740 Le Rove (FR)**
• **GROLL, Arnaud
13480 Cabries (FR)**
• **HOUPERT, Bastien
75015 Paris (FR)**

(74) Mandataire: **GPI & Associés
EuroParc de Pichaury
Bâtiment B2 - 1er Etage
1330, rue Guillibert de la Lauzière
13856 Aix-en-Provence Cedex 3 (FR)**

(56) Documents cités:
**US-A- 2 818 746     US-A1- 2010 308 157
US-A1- 2010 308 178**

**Description**

La présente invention est du domaine des commandes de vol des aéronefs. Elle concerne un combinateur de commandes de vol pour un aéronef et un aéronef équipé d'un tel combinateur.

Plus particulièrement, la présente invention concerne un combinateur de commandes de vol destiné au pilotage en lacet d'un hélicoptère hybride.

On entend par « hélicoptère hybride » un aéronef qui allie l'efficacité du vol vertical d'un aéronef à voilure tournante conventionnel aux performances à grande vitesse de déplacement permises par l'utilisation d'hélices propulsives.

Un aéronef à voilure tournante conventionnel comporte un fuselage et au moins un rotor principal entrainé en rotation par une motorisation de l'aéronef et assurant à la fois la sustentation et la propulsion dans le cas d'un giravion de type hélicoptère. Un tel aéronef comporte généralement un dispositif anticouple qui s'oppose au couple rotor dû à la réaction du rotor principal de l'aéronef au couple moteur utilisé pour mettre en rotation ce rotor principal. Ce couple rotor a en effet tendance à faire tourner le fuselage de l'aéronef en lacet en sens inverse de celui du rotor principal. Le dispositif anticouple permet également de piloter l'aéronef autour de son axe de lacet, qui est sensiblement parallèle à l'axe de rotation du rotor principal.

Un dispositif anticouple est souvent constitué par un rotor auxiliaire situé généralement à l'arrière de l'aéronef, à l'extrémité d'une poutre de queue de l'aéronef et entrainé en rotation par la motorisation de l'aéronef par l'intermédiaire d'une chaîne de transmission mécanique auxiliaire de puissance.

Un hélicoptère hybride comporte un fuselage, un rotor principal entrainé en rotation par une motorisation de l'hélicoptère hybride. De plus, l'hélicoptère hybride est pourvu d'une aile composée de deux demi-ailes et de deux hélices propulsives placées de part et d'autre du fuselage, par exemple sur les demi-ailes. Les hélices propulsives sont entrainées en rotation par la motorisation de l'hélicoptère hybride.

Le rotor principal est destiné à assurer la totalité de la portance de l'hélicoptère hybride pendant les phases de décollage, d'atterrissage et de vol vertical, puis en général partiellement pendant le vol de croisière, l'aile contribuant alors pour partie à la portance de l'hélicoptère hybride. Ainsi, le rotor principal exerce une partie de la sustentation de l'hélicoptère hybride en vol de croisière avec éventuellement une faible contribution aux forces propulsives ou traction et toujours avec une traînée minimale.

La propulsion de l'hélicoptère hybride en vol de croisière est alors assurée principalement par les hélices propulsives. En effet, en modifiant collectivement et d'une même quantité le pas des pales des hélices de l'hélicoptère hybride, il est possible de contrôler la poussée générée par ces hélices propulsives et, par suite, sa vitesse d'avancement.

En outre, les fonctions anticouple et de contrôle en lacet de l'hélicoptère hybride sont réalisées par l'utilisation d'une poussée différentielle exercée en général par les deux hélices propulsives, par exemple via la mise en oeuvre d'un palonnier par le pilote.

Dans ce but, les pas collectifs des pales des deux hélices propulsives s'écartent de leur pas moyen, le pas collectif des pales d'une hélice augmentant d'un pas différentiel alors que le pas collectif des pales de l'autre hélice diminue de ce même pas différentiel. Le pas collectif d'une hélice est ainsi égal à la somme du pas moyen et du pas différentiel alors que le pas collectif de l'autre hélice est égal à la différence du pas moyen et du pas différentiel. Autrement dit, le pas différentiel est égal à la demi-différence du pas collectif d'une hélice moins le pas collectif de l'autre hélice par exemple.

Parmi les commandes de vol d'un aéronef à voilure tournante, un manche de commande de pas cyclique permet au pilote de modifier le pas cyclique des pales du rotor principal pour diriger l'aéronef en tangage et en roulis. Un levier de commande de pas collectif permet au pilote de modifier le pas collectif des pales de ce rotor principal pour diriger l'aéronef en élévation. Un palonnier permet au pilote d'agir sur le dispositif anticouple pour diriger l'aéronef en lacet. Si ce dispositif anticouple est un rotor auxiliaire, le palonnier permet de modifier le pas collectif des pales de ce rotor auxiliaire. Dans le cas d'un hélicoptère hybride, ce palonnier permet de modifier de façon différentielle le pas collectif des pales de chacune des deux hélices propulsives.

En outre, un hélicoptère hybride comporte généralement une commande de vol supplémentaire constituée par une manette de poussée des hélices propulsives. Cette manette de poussée permet au pilote de modifier de façon identique le pas collectif des pales des deux hélices propulsives pour modifier la vitesse d'avancement de l'hélicoptère hybride.

Par ailleurs, les commandes de vol sont généralement reliées aux différentes pales, via des liaisons mécaniques dénommées « timoneries » ou « chaînes cinématiques mécaniques » et éventuellement via des servocommandes, notamment sur les aéronefs de grandes tailles pour lesquels les efforts de commandes sont plus importants.

Chaque chaîne cinématique mécanique applique un rapport de transmission appelé également « gain » entre l'ordre de commande de vol du pilote sur la commande de vol et la variation du pas des pales correspondantes. Ce gain peut être différent pour chaque commande de vol, mais il est généralement fixe pour chaque commande de vol d'un aéronef à voilure tournante conventionnel.

Il peut cependant être utile que ce gain soit modifié pour certaines commandes de vol, et la commande de vol en lacet en particulier dans le cas d'un hélicoptère hybride, en fonction des conditions de vol de l'aéronef.

Il est par exemple connu que, lorsqu'un aéronef a une vitesse d'avancement importante, une utilisation du palonnier sur de grandes amplitudes de commande peut conduire à une manoeuvre générant des contraintes mécaniques importantes sur l'aéronef et/ou à une embardée de l'aéronef violente voire dangereuse autour de son axe de lacet. Ce risque, bien connu pour les avions, est également réel pour les hélicoptères hybrides dont les vitesses d'avancement en vol de croisière sont nettement augmentées par rapport aux aéronefs à voilures tournantes conventionnels.

Afin de réduire ce risque, la chaîne cinématique mécanique de la commande de vol en lacet correspondant au palonnier peut inclure un combinateur. Le combinateur est un dispositif mécanique où se superposent par exemple un ordre issu d'une commande de vol et une valeur d'un paramètre de vol ou bien deux ordres issus de deux commandes de vol distinctes.

Un combinateur vise par exemple à modifier l'amplitude d'une commande de vol selon la vitesse d'avancement de l'aéronef comme le décrit le document FR 2476013. Un tel combinateur permet ainsi un déplacement important d'un organe de manoeuvre d'un avion, telle une gouverne de profondeur ou de direction, à faible vitesse d'avancement et de réduire l'amplitude de ce déplacement à une vitesse d'avancement importante. Ce combinateur comporte alors un organe de réglage qui se déplace en fonction d'un signal dérivé de la pression dynamique de l'air sur l'aéronef et limite plus ou moins le déplacement d'une bielle de la chaîne cinématique mécanique de la commande de vol. Le gain de la chaîne cinématique mécanique de cette commande de vol est fixe.

Un combinateur peut également modifier le gain appliqué par une chaîne cinématique mécanique d'une commande de vol selon la vitesse d'avancement de l'aéronef comme le décrit le document FR 1132452. Un tel combinateur permet ainsi qu'un déplacement identique de la commande de vol entraîne des déplacements différents d'un organe de manoeuvre en fonction de la vitesse d'avancement de l'aéronef. Le combinateur comporte un axe appartenant à une chaîne cinématique mécanique de la commande de vol d'un aéronef et dont la position est modifiée en fonction de la vitesse d'avancement de l'aéronef. Le changement de position de cet axe permet de modifier le gain de la chaîne cinématique mécanique.

Bien qu'intéressantes, ces solutions semblent peu adaptées au contexte très particulier d'un hélicoptère hybride.

Par ailleurs, on connaît les documents FR 2946316 et FR 2946317 qui concernent un hélicoptère hybride et qui décrivent un combinateur modifiant le gain appliqué par une chaîne cinématique mécanique d'une commande de vol en lacet selon l'ordre de commande en poussée des hélices propulsives. Ce combinateur comporte un moyen de réglage comportant des poulies et une courroie liée à la commande de poussée des hélices propulsives. Cette commande de poussée des hélices propulsives est en vol un indicateur fiable et robuste de la vitesse d'avancement par rapport à l'air de l'hélicoptère hybride.

De fait, une action d'un pilote sur la commande de poussée entraine un déplacement de la courroie et une modification de la longueur d'un bras de levier dans la chaîne cinématique mécanique de la commande de vol en lacet générant une variation du gain de cette chaîne cinématique mécanique de la commande de vol en lacet. Par ailleurs, ce document FR 2946316 décrit également un combinateur/coupleur permettant d'ajouter un terme correctif à la commande de vol en lacet en fonction de l'ordre de commande en poussée des hélices propulsives. Par contre, ces combinateurs sont complexes dans leur fonctionnement et dans leur implantation.

En outre, l'arrière plan technologique de l'invention comporte notamment les documents FR 2946318 et US 2818746.

La présente invention a alors pour objet de proposer un combinateur permettant de s'affranchir des limitations mentionnées ci-dessus afin de combiner de façon simple et fiable deux ordres de commandes de vol d'un aéronef.

La présente invention a pour but de modifier, en fonction d'un premier ordre de commande de vol d'un aéronef, le gain d'un deuxième ordre de commande de vol.

En particulier, la présente invention a pour objet un combinateur de commandes de vol en lacet d'un hélicoptère hybride permettant de modifier, en fonction d'un premier ordre de poussée des hélices propulsives, le gain d'un deuxième ordre de commande de vol en lacet.

Selon l'invention, un combinateur de commandes de vol pour aéronef destiné à combiner un premier ordre de commande de vol et un deuxième ordre de commande de vol, comporte :

- un support destiné à être mobile en rotation autour d'un premier axe A1 par rapport à l'aéronef,
- une première bielle de renvoi liée au support par une liaison pivot autour d'un deuxième axe A2,
- une seconde bielle liée au support par une liaison pivot autour d'un troisième axe A3 parallèle au deuxième axe A2, le deuxième axe A2 et le troisième axe A3 formant un premier plan P1,
- un plateau lié à la première bielle de renvoi par une liaison pivot autour d'un quatrième axe A4 et à la seconde bielle par une liaison pivot autour d'un cinquième axe A5, le quatrième axe A4 et le cinquième axe A5 étant parallèles au deuxième axe A2 afin de former un système en parallélogramme avec le support, la première bielle de renvoi et la seconde bielle, le quatrième axe A4 et le cinquième axe5 A formant un deuxième plan P2 parallèle au premier plan P1, le deuxième axe A2 et le quatrième axe A4 formant un troisième plan P3 parallèle à un quatrième plan P4 formé par le cinquième axe A5 et le troisième axe A3,

- un premier levier lié à la première bielle de renvoi par une première articulation permettant au moins une rotation du premier levier par rapport à la première bielle de renvoi,
- un deuxième levier lié au plateau par une deuxième articulation permettant au moins une rotation du deuxième levier par rapport au plateau, et
- un troisième levier lié au plateau par une troisième articulation permettant au moins une rotation du deuxième levier par rapport au plateau.

Ce combinateur de commandes de vol selon l'invention est notamment destiné aux dispositifs de commandes de vol des aéronefs, notamment des aéronefs à voilures tournantes et en particulier des hélicoptères hybrides.

Le premier levier et le deuxième levier sont reliés à des commandes de vol de l'aéronef. Le premier levier transmet le premier ordre d'une première commande de vol et le deuxième levier transmet le deuxième ordre d'une seconde commande de vol. Le troisième levier transmet alors une combinaison des premier et deuxième ordres de commandes de vol à un organe de manoeuvre de l'aéronef.

Ainsi, le premier levier fait partie de la chaîne cinématique mécanique de cette première commande de vol alors que le deuxième levier et le troisième levier font partie avec le plateau, le support, la première bielle de renvoi et la seconde bielle de la chaîne cinématique mécanique de la seconde commande de vol.

Dans le cas où le combinateur selon l'invention équipe un hélicoptère hybride muni d'hélices propulsives, le premier levier est de préférence relié à une manette de réglage de la poussée de ces hélices propulsives transmettant un premier ordre de poussée et le deuxième levier est relié à un palonnier transmettant un deuxième ordre de commande de vol en lacet. Le troisième levier transmet alors une combinaison des premier et deuxième ordres de commandes de vol afin de commander un mouvement de l'aéronef autour de son axe de lacet par une variation différentielle du pas collectif des pales des hélices propulsives. La valeur de cette variation différentielle varie notamment en fonction du premier ordre de poussée.

Le premier levier est lié à la première bielle de renvoi, elle-même liée au support et au plateau. De fait, un premier déplacement principalement en translation du premier levier, suite à une action du pilote sur la première commande de vol, provoque une rotation de la première bielle de renvoi par rapport au support autour du deuxième axe A2 et, par suite, un deuxième déplacement du plateau par rapport à ce support. Le plateau formant avec le support, la première bielle de renvoi et la seconde bielle un parallélogramme, la seconde bielle a également un mouvement de rotation par rapport au support autour du troisième axe A3. Le plateau se déplace alors de telle sorte que les premier et second plans P1 et P2 restent parallèles et les troisième et quatrième plans P3 et P4 restent également parallèles.

En conséquence, chaque point du plateau se déplace par rapport au support en décrivant un arc de cercle d'un même rayon égal à la distance entre le deuxième axe A2 et le quatrième axe A4. Chaque arc de cercle est situé dans un plan perpendiculaire au deuxième axe A2.

Par ailleurs, le plateau de ce combinateur étant lié au support par l'intermédiaire de la première bielle de renvoi et de la seconde bielle, accompagne avec cette première bielle de renvoi et cette seconde bielle tout mouvement de rotation du support par rapport à l'aéronef autour du premier axe A1, le deuxième axe A2 étant de plus non parallèle au premier axe A1. De préférence, le premier axe A1 est perpendiculaire au deuxième axe A2. De plus, le premier axe A1 peut être perpendiculaire au premier plan P1.

Le premier levier est lié à la première bielle de renvoi par la première articulation permettant au moins une rotation du premier levier par rapport à la première bielle de renvoi par exemple autour d'un sixième axe A6 sensiblement parallèle au deuxième axe A2. Par exemple, cette première articulation peut être une liaison pivot autour du sixième axe A6. De préférence, cette première articulation est une liaison rotule afin de limiter les contraintes dans la chaîne cinématique mécanique de la première commande de vol.

En outre, le premier déplacement principalement en translation du premier levier est réalisé de préférence selon une direction sensiblement perpendiculaire au second axe A2. Par exemple, le premier déplacement principalement en translation du premier levier est réalisé de préférence selon une direction sensiblement parallèle au premier axe A1.

Le second levier et le troisième levier sont liés au plateau respectivement par une deuxième articulation et une troisième articulation permettant chacune au moins une rotation par exemple autour d'un axe sensiblement perpendiculaire au deuxième axe A2. De préférence, cette deuxième articulation et cette troisième articulation sont des liaisons rotules afin de limiter les contraintes présentes dans la chaîne cinématique mécanique de la seconde commande de vol. De plus, la deuxième articulation et la troisième articulation sont de préférence positionnées sur le plateau de façon symétrique par rapport au premier axe A1.

De fait, un troisième déplacement principalement en translation du second levier, suite à une action du pilote sur la seconde commande de vol, provoque une rotation du plateau et du support autour du premier axe A1. Par suite, cette rotation du plateau et du support provoque un quatrième déplacement principalement en translation du troisième levier. Ainsi, le troisième levier peut transmettre un troisième ordre de commande de vol à un organe de manoeuvre de l'aéronef en combinant les premier et deuxième ordres de commandes de vol.

Le troisième déplacement et le quatrième déplacement sont de préférence selon une direction sensiblement perpendiculaire au premier axe A1.

Avantageusement, le gain entre le troisième déplacement principalement en translation du second levier et le quatrième déplacement principalement en translation du troisième levier varie suivant le deuxième déplacement du plateau par rapport à ce support. En effet, ce gain correspond au rapport d'une première distance entre le premier axe A1 et la troisième articulation par une seconde distance entre le premier axe A1 et la deuxième articulation. Lorsque la première distance et la seconde distance sont égales, le gain est égal à un. Par contre, lorsque la première distance est inférieure à la seconde distance, le gain est inférieur à un. Inversement, lorsque la première distance est supérieure à la seconde distance, le gain est supérieur à un.

Ainsi, lors du deuxième déplacement du plateau par rapport au support suite à une action du pilote sur la première commande de vol, la première distance et la seconde distance varient et, par suite, le gain varie également, en fonction de la position du premier levier et donc du premier ordre de commande de vol.

Le combinateur de commandes de vol selon l'invention permet de modifier le gain du deuxième ordre de commande de vol en fonction du premier ordre de commande de vol, combinant ainsi le premier et le deuxième ordres de commandes de vol.

En particulier, dans le cas d'un hélicoptère hybride, le combinateur de commandes de vol selon l'invention permet de modifier le gain du deuxième ordre de commande de vol en lacet en fonction du premier ordre de poussée des hélices propulsives.

Le gain décroît de façon sensiblement linéaire avec le premier ordre de commande de vol, par exemple d'un gain maximal atteint lorsque le premier ordre de commande de vol est minimal vers un gain minimal atteint lorsque le premier ordre de commande de vol est maximal.

Dans le cas d'un hélicoptère hybride, le gain varie par exemple d'un gain maximal, atteint lorsque la commande de poussée génère une poussée minimale des hélices propulsives, telle qu'une poussée nulle en vol stationnaire, vers un gain minimal atteint lorsque cette commande de poussée génère une poussée maximale des hélices propulsives.

La commande de poussée des hélices propulsives constitue en vol un indicateur fiable et robuste de la vitesse d'avancement par rapport à l'air de l'hélicoptère hybride.

Par suite, le gain de la chaîne cinématique mécanique de la seconde commande de vol en lacet varie en fonction de la vitesse d'avancement de l'aéronef.

De la sorte, à une grande vitesse d'avancement de l'hélicoptère hybride, l'autorité de la seconde commande de vol en lacet est réduite, minimisant son action sur le comportement de l'aéronef. Ainsi, un même ordre donné à la seconde commande de vol en lacet génère une variation différentielle du pas collectif des pales des hélices propulsives plus importante à faible vitesse d'avancement qu'à grande vitesse.

Il est à noter que le gain maximal et le gain minimal sont déterminés à l'aide d'essais usuels en fonction des caractéristiques de l'aéronef, de simulations permettant de tester différentes configurations, l'homme du métier étant à même d'optimiser les valeurs de ces gains maximal et minimal. Par exemple, le gain maximal peut être égal à une unité alors que le gain minimal est égal à un tiers pour la seconde commande de vol en lacet d'un hélicoptère hybride.

Par conséquent, le combinateur de commandes de vol selon l'invention permet de réduire la variation du pas différentiel entre les pales des première et deuxième hélices en fonction du premier ordre de commande de vol de poussée. Le combinateur de commandes de vol selon l'invention permet de limiter l'autorité du pilote de l'hélicoptère hybride sur le deuxième ordre de commande de vol en lacet lors des vols de croisière à hautes vitesses et garantit notamment l'absence d'embardée violente susceptible d'endommager l'hélicoptère hybride lors de ces vols de croisière.

De cette manière, la sensibilité de la chaîne cinématique mécanique de la seconde commande de vol peut varier selon le premier ordre de commande de vol de la première commande de vol, augmentant ou diminuant l'autorité du pilote. Par exemple, l'autorité du pilote en lacet diminue lorsque l'aéronef évolue à des hautes vitesses d'avancement et ainsi évite des variations trop brusques, voire incontrôlables, de l'aéronef subissant à ces hautes vitesses des effets aérodynamiques non négligeables.

En outre, les deuxième et troisième leviers ont une longueur importante vis-à-vis des dimensions du plateau, de la première bielle de renvoi et de la seconde bielle. En conséquence, chaque deuxième déplacement du plateau suite à un premier déplacement du premier levier entraîne de très faibles débattements angulaires du deuxième et du troisième leviers. Ces très faibles débattements angulaires permettent avantageusement la compatibilité du second déplacement du plateau avec les cinématiques du second levier et du troisième levier. De plus, le deuxième déplacement du plateau n'entraîne avantageusement aucun changement sur le troisième ordre transmis par le troisième levier.

Les premier, deuxième et troisième leviers ont par exemple une longueur de l'ordre de 0.5m alors que le plateau, la première bielle de renvoi et la seconde bielle ont des dimensions de l'ordre de 0.25 m.

Par ailleurs, la cinématique du combinateur de commandes de vol selon l'invention peut garantir avantageusement l'absence d'un couplage significatif de la commande du second levier vers la commande du premier levier. Ainsi, un troisième déplacement du second levier n'entraîne aucun déplacement du premier levier, ni modification du gain du combinateur. Cette absence d'un couplage significatif est notamment garantie lorsque la direction du troisième déplacement du second levier est sensiblement parallèle au deuxième axe A2.

Il est à noter que, ce couplage est nul lorsque le premier levier s'étend selon la direction du premier axe A1 et se déplace sensiblement selon cette direction du premier axe A1. Dans le cas contraire, un couplage existe, mais il est très faible et ne modifie pas le fonctionnement du combinateur de commandes de vol selon l'invention.

La présente invention a aussi pour objet un aéronef à voilure tournante comportant un premier moyen de commande de vol, un second moyen de commande de vol et un combinateur de commandes de vol tel que précédemment décrit. Le premier moyen de commande de vol fournit un premier ordre de commande de vol et est lié au premier levier du combinateur. Le second moyen de commande de vol fournit un deuxième ordre de commande de vol et est lié au deuxième levier du combinateur. Le combinateur fournit alors un troisième ordre de commande de vol par l'intermédiaire du troisième levier du combinateur en combinant le premier ordre de commande de vol et le deuxième ordre de commande de vol.

L'aéronef est par exemple un hélicoptère hybride comportant un fuselage et deux hélices propulsives situées de part et d'autre du fuselage. Le premier moyen de commande de vol commande une variation identique du pas collectif des pales des hélices propulsives et le second moyen de commande de vol commande une variation différentielle de ce pas collectif des pales des hélices propulsives. De la sorte, le troisième levier commande le pas collectif différentiel des pales des hélices propulsives selon le deuxième ordre de commande de vol en prenant en compte le premier ordre de commande de vol.

L'invention et ses avantages apparaîtront avec plus de détails dans le cadre de la description qui suit avec des exemples de réalisation donnés à titre illustratif en référence aux figures annexées qui représentent :

- la figure 1, un aéronef hybride,
- les figures 2 à 3, deux vues du combinateur selon l'invention.

Les éléments présents dans plusieurs figures distinctes sont affectés d'une seule et même référence.

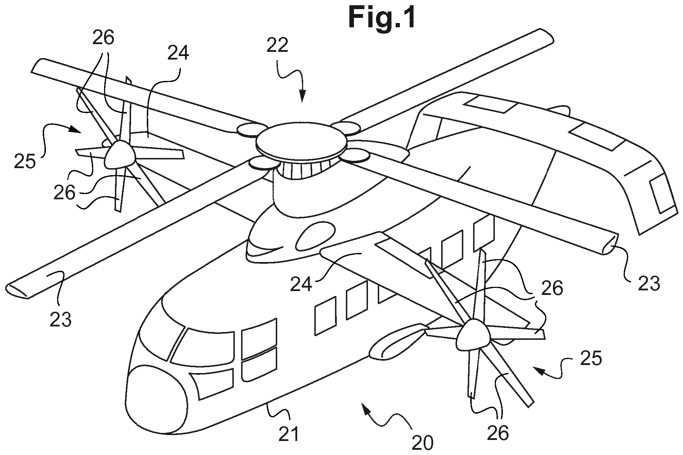

La figure 1 représente un aéronef hybride 20 comportant un fuselage 21, un rotor principal 22 comportant des premières pales 23, deux demi-ailes 24 positionnées de part et d'autre du fuselage 21 et deux hélices propulsives 25 munies de secondes pales 26. Une hélice propulsive 25 est positionnée sur chaque demi-aile 24.

Le rotor principal 22 assure la totalité de la portance de l'hélicoptère hybride 20 pendant les phases de décollage, d'atterrissage et de vol vertical ainsi que les mouvements autour de ses axes de tangage et de roulis. Pendant un vol de croisière, cette portance est répartie entre le rotor principal 22 et les demi-ailes 24.

La propulsion de l'hélicoptère hybride 20 est assurée principalement par les hélices propulsives 25, notamment en vol de croisière, éventuellement avec une contribution du rotor principal 22. Chaque hélice propulsive 25 génère une poussée variable selon le pas collectif de leurs secondes pales 26 permettant de contrôler la vitesse d'avancement de l'hélicoptère hybride 20.

En outre, les hélices propulsives 25 assurent également les fonctions anticouple et de contrôle en lacet de l'hélicoptère hybride 20, par l'intermédiaire d'une poussée différentielle de ces deux hélices propulsives 20.

L'hélicoptère hybride 20 comporte comme première commande de vol une manette de poussée des hélices propulsives 25 permettant au pilote de modifier de façon identique le pas collectif des secondes pales 26 des deux hélices propulsives 25 pour modifier la vitesse d'avancement de l'hélicoptère hybride 20.

L'hélicoptère hybride 20 comporte également comme seconde commande de vol un palonnier permettant au pilote de contrôler les mouvements de l'hélicoptère hybride 20 autour de son axe de lacet en modifiant de façon différentielle le pas collectif des secondes pales 26 des deux hélices propulsives 20.

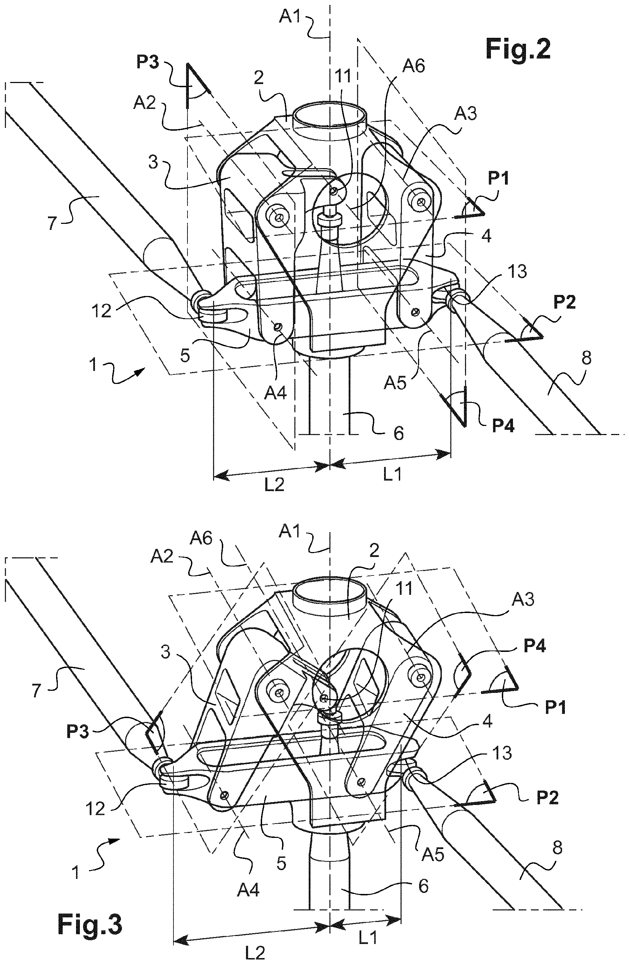

L'hélicoptère hybride 20 comporte enfin un combinateur 1 représenté sur les figures 2 et 3.

Ce combinateur 1 comporte un support 2 lié à l'aéronef 20 et mobile en rotation par rapport à cet aéronef 20 autour d'un premier axe A1. Sur les figures 2 et 3, le support 2 est représenté de façon transparente afin de faciliter la compréhension du fonctionnement du combinateur 1.

Ce combinateur 1 comporte également une première bielle de renvoi 3, une seconde bielle 4 et un plateau 5.

La première bielle de renvoi 3 et la seconde bielle 4 sont liées au support 2 respectivement par une liaison pivot autour d'un deuxième axe A2 et par une liaison pivot autour d'un troisième axe A3. Le deuxième axe A2 et le troisième axe A3 sont parallèles l'un à l'autre et forment un premier plan P1. Ce premier plan P1 est perpendiculaire au premier axe A1.

Le plateau 5 est lié à la première bielle de renvoi 3 et à la seconde bielle 4 respectivement par une liaison pivot autour d'un quatrième axe A4 et par une liaison pivot autour d'un cinquième axe A5. Le quatrième axe A4 et le cinquième axe A5 sont parallèles au deuxième axe A2 et forment un deuxième plan P2 parallèle au premier plan P1. Le deuxième axe A2 et le quatrième axe A4 forment également un troisième plan P3. De même, le cinquième axe A5 et le troisième axe A3 forment un quatrième plan P4 parallèle au troisième plan P3.

Le support 2, la première bielle de renvoi 3, la seconde bielle 4 et le plateau 5 forment ainsi un système en parallélogramme. De la sorte, quels que soient les mouvements autour de ces liaisons pivot, les premier et deuxième plans P1, P2 sont toujours parallèles entre eux et les troisième et quatrième plans P3, P4 sont également toujours parallèles entre eux.

Un premier levier 6 est lié par son extrémité à la première bielle de renvoi 3 par une première articulation qui est une liaison pivot 11 autour d'un sixième axe A6 parallèle au deuxième axe A2 et non confondu avec ce deuxième axe A2. Une distance non nulle sépare donc le deuxième axe A2 et le sixième axe A6.

Ce premier levier 6 est lié à la chaîne cinématique mécanique de la manette de poussée des hélices propulsives 25. Ce premier levier 6 est de forme allongée et s'étend le long du premier axe A1. Ainsi, une action d'un pilote de l'hélicoptère hybride 20 sur la manette de poussée des hélices propulsives 25 provoque d'une part une variation identique du pas collectif des secondes pales 26 des deux hélices propulsives 25 et d'autre part un premier déplacement du premier levier 6 principalement selon la direction du premier axe A1.

La distance entre le deuxième axe A2 et le sixième axe A6 étant non nulle, le mouvement du premier levier 6 provoque la rotation de la première bielle de renvoi 3 autour du deuxième axe A2. En conséquence, la seconde bielle 4 et le plateau 5 se déplacent également par rapport à ce support 2. Le support 2, la première bielle de renvoi 3, la seconde bielle 4 et le plateau 5 formant un système en parallélogramme, lors de ce deuxième déplacement du plateau 5, les premier et deuxième plans P1,P2 et les troisième et quatrième plans P3,P4 restent respectivement parallèles entre eux.

Un deuxième levier 7 et un troisième levier 8 sont liés par une de leurs extrémités au plateau 5 respectivement par une deuxième articulation 12 et une troisième articulation 13. Cette deuxième articulation 12 et cette troisième articulation 13 sont des liaisons rotules.

Le deuxième levier 7 et le troisième levier 8 sont de forme allongée et s'étendent parallèlement au deuxième axe A2. Le deuxième levier 7 est lié à la chaîne cinématique mécanique du palonnier.

Ainsi, une action d'un pilote de l'hélicoptère hybride 20 sur le palonnier provoque un troisième déplacement du deuxième levier 7 principalement selon une direction parallèle au deuxième axe A2. Ce troisième déplacement du deuxième levier 7 entraîne par l'intermédiaire de la deuxième articulation 12 un mouvement du plateau 5. Ce plateau 5, étant lié au support 2 par la première bielle de renvoi 3 et la seconde bielle 4, transmet ce mouvement au support 2. De fait, l'ensemble formé par le support 2, la première bielle de renvoi 3, la seconde bielle 4 et le plateau 5 tourne autour du premier axe A1. Ce mouvement de rotation de cet ensemble est alors transmis au troisième levier 8 par l'intermédiaire du plateau 5 et de la troisième articulation 13. Le troisième levier 8 a alors un quatrième déplacement principalement selon une direction parallèle au deuxième axe A2. Ce troisième levier 8 permet enfin de modifier de façon différentielle le pas collectif des secondes pales 26 des deux hélices propulsives 25.

Le troisième déplacement du deuxième levier 7 étant transmis au troisième levier 8 par l'intermédiaire d'une rotation de l'ensemble formé par le support 2, la première bielle de renvoi 3, la seconde bielle 4 et le plateau 5 autour du premier axe A1, un rapport de transmission appelé « gain » existe entre ce troisième déplacement et le quatrième déplacement du troisième levier 8. Ce gain est constitué par le rapport d'une première distance L1 entre le premier axe A1 et la troisième articulation 13 par une seconde distance L2 entre le premier axe A1 et la seconde articulation 12.

Ainsi, sur la figure 2, aucune action n'est exercée par un pilote sur la manette de poussée des hélices propulsives 25. De fait, aucun premier déplacement du premier levier 6 n'a été provoqué. Les hélices propulsives 25 n'exercent alors aucune poussée sur l'hélicoptère hybride 20. La première distance L1 et la seconde distance L2 sont égales.

En conséquence, le gain du combinateur 1 est égal au rapport $\frac{L1}{L2}$ et donc à un. De la sorte, un troisième déplacement du deuxième levier 7 sur une première longueur entraîne un quatrième déplacement du troisième levier 8 de cette même première longueur.

Par contre, sur la figure 3, un pilote exerce une action sur la manette de poussée des hélices propulsives 25 provoquant un premier déplacement du premier levier 6 selon la direction du premier axe A1. Les hélices propulsives 25 exercent alors une poussée maximale sur l'hélicoptère hybride 20 qui se déplace avec une vitesse d'avancement élevée. La première distance L1 et la seconde distance L2 sont alors différentes, la première distance L1 étant inférieure à la seconde distance L2.

Par suite, le gain du combinateur 1 qui est égal au rapport $\frac{L1}{L2}$ est donc inférieur à un. De la sorte, un troisième déplacement du deuxième levier 7 sur une première longueur entraîne un quatrième déplacement du troisième levier 8 d'une seconde longueur inférieure à la première longueur.

Le combinateur 1 permet ainsi de limiter l'autorité du palonnier lorsque l'hélicoptère hybride 20 se déplace avec une vitesse d'avancement élevée, évitant notamment la réalisation, lors d'un vol de croisière, d'une manoeuvre générant des contraintes mécaniques importantes sur l'hélicoptère hybride 20 susceptible de l'endommager. Le combinateur 1 permet également de limiter les risques d'embardée dangereuse de l'hélicoptère hybride 20 autour de son axe de lacet lors d'un vol de croisière.

En outre, les dimensions du deuxième levier 7 et du troisième levier 8 sont importantes vis-à-vis des dimensions du plateau 5, de la première bielle de renvoi 3 et de la seconde bielle 4. De fait, lors d'un premier déplacement du premier levier 6 entraînant un deuxième déplacement du plateau 5, le deuxième levier 7 et le troisième levier 8 ont de très faibles débattements angulaires. De même, le troisième déplacement du deuxième levier 7 et le quatrième déplacement du troisième levier 8 s'accompagnent de très faibles débattements angulaires. Ces débattements angulaires du deuxième levier 7 et du troisième levier 8 étant très faibles, ils peuvent être négligés. En conséquence, le troisième déplacement du deuxième levier 7 et le quatrième déplacement du troisième levier 8 peuvent être considérés comme des mouvements de translation uniquement.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Combinateur (1) de commandes de vol pour aéronef (20) destiné à combiner un premier ordre de commande de vol et un deuxième ordre de commande de vol, ledit combinateur (1) de commandes de vol comportant un support (2) apte à être mobile en rotation autour d'un premier axe (A1) par rapport audit aéronef (20),
**caractérisé en ce que** ledit combinateur (1) de commandes de vol comporte :

   - une première bielle de renvoi (3) liée audit support (2) par une liaison pivot autour d'un deuxième axe (A2),
   - une seconde bielle (4) liée audit support (2) par une liaison pivot autour d'un troisième axe (A3) parallèle audit deuxième axe (A2), ledit deuxième axe (A2) et ledit troisième axe (A3) formant un premier plan (P1),
   - un plateau (5) lié à ladite première bielle de renvoi (3) par une liaison pivot autour d'un quatrième axe (A4) et à ladite seconde bielle (4) par une liaison pivot autour d'un cinquième axe (A5), ledit quatrième axe (A4) et ledit cinquième axe (A5) étant parallèles audit deuxième axe (A2) afin de former un système en parallélogramme avec ledit support (2) et lesdites première bielle de renvoi (3) et seconde bielle (4), ledit quatrième axe (A4) et ledit cinquième axe (A5) formant un deuxième plan (P2) parallèle audit premier plan (P1), ledit deuxième axe (A2) et ledit quatrième axe (A4) formant un troisième plan (P3) parallèle à un quatrième plan (P4) formé par ledit cinquième axe (A5) et ledit troisième axe (A3),
   - un premier levier (6) lié à ladite première bielle de renvoi (3) par une première articulation (11) permettant au moins une rotation dudit premier levier (6) par rapport à ladite première bielle de renvoi (3),
   - un deuxième levier (7) lié audit plateau (5) par une deuxième articulation (12) permettant au moins une rotation dudit deuxième levier (7) par rapport audit plateau (5), et
   - un troisième levier (8) lié audit plateau (5) par une troisième articulation (13) permettant au moins une rotation dudit deuxième levier (7) par rapport audit plateau (5).

2. Combinateur (1) de commandes de vol selon la revendication 1,
**caractérisé en ce que** ledit deuxième axe (A2) est perpendiculaire audit premier axe (A1).

3. Combinateur (1) de commandes de vol selon l'une quelconque des revendications 1 à 2,
**caractérisé en ce que** ledit premier plan (P1) est perpendiculaire audit premier axe (A1).

4. Combinateur (1) de commandes de vol selon l'une quelconque des revendications 1 à 3,
**caractérisé en ce que** ladite première articulation (11) est une liaison rotule.

5. Combinateur (1) de commandes de vol selon l'une quelconque des revendications 1 à 4,
**caractérisé en ce que** ladite deuxième articulation (12) et ladite troisième articulation (13) sont des liaisons rotules.

6. Combinateur (1) de commandes de vol selon l'une quelconque des revendications 1 à 5,
**caractérisé en ce que** ledit premier levier (6) se déplace sensiblement perpendiculairement audit deuxième axe (A2).

7. Combinateur (1) de commandes de vol selon l'une quelconque des revendications 1 à 6,
**caractérisé en ce que** ledit deuxième levier (7) se déplace sensiblement parallèlement audit deuxième axe (A2).

8. Combinateur (1) de commandes de vol selon l'une quelconque des revendications 1 à 7,
**caractérisé en ce que** ledit premier levier (6) s'étend selon la direction dudit premier axe (A1) et se déplace sensiblement selon ladite direction dudit premier axe (A1).

9. Combinateur (1) de commandes de vol selon l'une quelconque des revendications 1 à 8,
**caractérisé en ce que** ledit premier levier (6) fournit ledit premier ordre de commande de vol et ledit deuxième levier (7) fournit ledit deuxième ordre de commande de vol, ledit troisième levier (8) fournissant un troisième ordre de commande de vol combinant ledit premier ordre de commande de vol et ledit deuxième ordre de commande de vol.

10. Aéronef (20) à voilure tournante comportant un premier moyen de commande de vol, un second moyen de commande de vol et un combinateur (1), ledit premier moyen de commande de vol fournissant un premier ordre de commande de vol et ledit second moyen de commande de vol fournissant un deuxième ordre de commande de vol, ledit combinateur (1) combinant ledit premier ordre de commande de vol et ledit deuxième ordre de commande de vol, **caractérisé en ce que** ledit combinateur (1) de commandes de vol est selon l'une quelconque des revendications 1 à 9, ledit premier moyen de commande de vol étant lié audit premier levier (6) et ledit second moyen de commande de vol étant lié audit deuxième levier (7).

11. Aéronef (20) selon la revendication 10,
**caractérisé en ce que**, ledit aéronef (20) comportant un fuselage (21), un rotor principal (22) muni de premières pales (23) et deux hélices propulsives (25) munies de secondes pales (26) situées de part et d'autre dudit fuselage (21), ledit premier moyen de commande de vol commande une variation identique du pas collectif desdites secondes pales (26) desdites hélices propulsives (25) et ledit second moyen de commande de vol commande une variation différentielle dudit pas collectif desdites secondes pales (26) desdites hélices propulsives (25) afin que ledit troisième levier (8) commande ledit pas collectif différentiel desdites hélices propulsives (23) en prenant en compte ladite variation identique dudit pas collectif desdites secondes pales (26) desdites hélices propulsives (25).

**Patentansprüche**

1. Flugsteuerungsbefehlskombinator (1) für ein Luftfahrzeug (20), der dazu bestimmt ist, einen ersten Flugsteuerungsbefehl und einen zweiten Flugsteuerungsbefehl zu kombinieren, wobei der Flugsteuerungsbefehlskombinator (1) einen Träger (2) aufweist, der um eine erste Achse (A1) relativ zu dem Luftfahrzeug (20) drehbeweglich ist, **dadurch gekennzeichnet, dass** der Flugsteuerungsbefehlskombinator (1) aufweist:

- ein erstes Verschiebepleuel (3), das mit dem Träger (2) über eine Schwenkverbindung um eine zweite Achse (A2) verbunden ist,
- ein zweites Pleuel (4), das mit dem Träger (2) über eine Schwenkverbindung um eine dritte Achse (A3) verbunden ist, die parallel zur zweiten Achse (A2) verläuft, wobei die zweite Achse (A2) und die dritte Achse (A3) eine erste Ebene (P1) bilden,
- eine Platte (5), die mit dem ersten Verschiebepleuel (3) über eine Schwenkverbindung um eine vierte Achse (A4) und mit dem zweiten Pleuel (4) über eine Schwenkverbindung um eine fünfte Achse (A5) verbunden ist, wobei die vierte Achse (A4) und die fünfte Achse (A5) parallel zu der zweiten Achse (A2) verlaufen, um ein Parallelogrammsystem mit dem Träger (2) und dem ersten Verschiebepleuel (3) und dem zweiten Pleuel (4) zu bilden, wobei die vierte Achse (A4) und die fünfte Achse (A5) eine zweite Ebene (P2) bilden, die parallel zu der ersten Ebene (P1) verläuft, wobei die zweite Achse (A2) und die dritte Achse (A4) eine dritte Ebene (P3) bilden, die parallel zu einer vierten Ebene (P4) verläuft, die von der fünften Achse (A5) und der dritten Achse (A3) gebildet wird,
- einen ersten Hebelarm (6), der mit dem ersten Verschiebepleuel (3) über ein erstes Gelenk (11) verbunden ist, welches mindestens eine Drehung des ersten Hebelarms (6) bezüglich des ersten Verschiebepleuels (3) ermöglicht,
- einen zweiten Hebelarm (7), der mit der Platte (5) über ein zweites Gelenk (12) verbunden ist, welches mindestens eine Drehung des zweiten Hebelarms (7) bezüglich der Platte (5) ermöglicht und
- einen dritten Hebelarm (8), der mit der Platte (5) über ein drittes Gelenk (13) verbunden ist, welches mindestens eine Drehung des zweiten Hebelarms (7) bezüglich der Platte (5) ermöglicht.

2. Flugsteuerungsbefehlskombinator (1) nach Anspruch 1,
**dadurch gekennzeichnet, dass** die zweite Achse (A2) senkrecht zu der ersten Achse (A1) verläuft.

3. Flugsteuerungsbefehlskombinator (1) nach einem der Ansprüche 1 bis 2,
**dadurch gekennzeichnet, dass** die erste Ebene (P1) senkrecht zu der ersten Achse (A1) verläuft.

4. Flugsteuerungsbefehlskombinator (1) nach einem der Ansprüche 1 bis 3,
**dadurch gekennzeichnet, dass** das erste Gelenk (11) eine Kugelgelenkverbindung ist.

5. Flugsteuerungsbefehlskombinator (1) nach einem der Ansprüche 1 bis 4,
**dadurch gekennzeichnet, dass** das zweite Gelenk (12) und das dritte Gelenk (13) Kugelgelenkverbindungen sind.

6. Flugsteuerungsbefehlskombinator (1) nach einem der Ansprüche 1 bis 5,
**dadurch gekennzeichnet, dass** der erste Hebelarm (6) sich im Wesentlichen senkrecht zu der zweiten Achse (A2) bewegt.

7. Flugsteuerungsbefehlskombinator (1) nach einem der Ansprüche 1 bis 6,
**dadurch gekennzeichnet, dass** der zweite Hebelarm (7) sich im Wesentlichen parallel zu der zweiten Achse (A2) bewegt.

8. Flugsteuerungsbefehlskombinator (1) nach einem der Ansprüche 1 bis 7,
**dadurch gekennzeichnet, dass** der erste Hebelarm (6) sich in der Richtung der ersten Achse (A1) erstreckt und sich im Wesentlichen entlang der Richtung der ersten Achse (A1) bewegt.

9. Flugsteuerungsbefehlskombinator (1) nach einem der Ansprüche 1 bis 8,
**dadurch gekennzeichnet, dass** der erste Hebelarm (6) den ersten Flugsteuerungsbefehl liefert und der zweite Hebelarm (7) den zweiten Flugsteuerungsbefehl liefert, wobei der dritte Hebelarm (8) einen dritten Flugsteuerungsbefehl liefert, der den ersten Flugsteuerungsbefehl und den zweiten Flugsteuerungsbefehl kombiniert.

10. Drehflügelluftfahrzeug (20) mit einem ersten Flugsteuerungsmittel, einem zweiten Flugsteuerungsmittel und einem Kombinator (1), wobei das erste Flugsteuerungsmittel einen ersten Flugsteuerungsbefehl liefert und das zweite Flugsteuerungsmittel einen zweiten Flugsteuerungsbefehl liefert, wobei der Kombinator (1) den ersten Flugsteuerungsbefehl mit dem zweiten Flugsteuerungsbefehl kombiniert,
**dadurch gekennzeichnet, dass** der Flugsteuerungsbefehlskombinator (1) ein Kombinator gemäß den Ansprüchen 1 bis 9 ist, wobei das erste Flugsteuerungsmittel mit dem ersten Hebelarm (6) verbunden ist und das zweite Flugsteuerungsmittel mit dem zweiten Hebelarm (7) verbunden ist.

11. Luftfahrzeug (20) nach Anspruch 10,
**dadurch gekennzeichnet, dass** das Luftfahrzeug (20) einen Rumpf (21), einen Hauptrotor (22) mit ersten Rotorblättern (23) und zwei Vortriebspropeller (25) mit zweiten Rotorblättern (26), die zu beiden Seiten des Rumpfes (21) angeordnet sind, aufweist, wobei das erste Flugsteuerungsmittel eine identische Änderung der kollektiven Rotorblattverstellung der zweiten Rotorblätter (26) der Vortriebspropeller (25) steuert und das zweite Flugsteuerungsmittel eine differentielle Änderung der kollektiven Rotorblattverstellung der zweiten Rotorblätter (26) der Vortriebspropeller (25) steuert, damit der dritte Hebelarm (8) die differentielle kollektive Rotorblattverstellung der Vortriebspropeller (23) steuert, indem er die identische Änderung der kollektiven Rotorblattverstellung der zweiten Rotorblätter (26) der Vortriebspropeller (25) berücksichtigt.

**Claims**

1. Flight control combiner (1) for aircraft (20) intended to combine a first flight control order and a second flight control order, said flight control combiner (1) comprising a support (2) suitable for being movable in rotation about a first axis (A1) with respect to said aircraft (20),
**characterised in that** said flight control combiner (1) comprises:

- a first return link (3) connected to said support (2) by a pivot connection about a second axis (A2),
- a second link (4) connected to said support (2) by a pivot connection about a third axis (A3) parallel to said second axis (A2), said second axis (A2) and said third axis (A3) forming a first plane (P1),
- a plate (5) connected to said first return link (3) by a pivot connection about a fourth axis (A4) and to said second link (4) by a pivot connection about a fifth axis (A5), said fourth axis (A4) and said fifth axis (A5) being parallel to said second axis (A2) in order to form a parallelogram system with said support (2) and said first return link (3) and second link (4), said fourth axis (A4) and said fifth axis (A5) forming a second plane (P2) parallel to said first plane (P1), said second axis (A2) and said fourth axis (A4) forming a third plane (P3) parallel to a fourth plane (P4) formed by said fifth axis (A5) and said third axis (A3),
- a first lever (6) connected to said first return link (3) by a first articulation (11) allowing at least a rotation of said first lever (6) with respect to said first return link (3),
- a second lever (7) connected to said plate (5) by a second articulation (12) allowing at least a rotation of said second lever (7) with respect to said plate (5), and
- a third lever (8) connected to said plate (5) by a third articulation (13) allowing at least a rotation of said second lever (7) with respect to said plate (5).

2. Flight control combiner (1) according to claim 1, **characterised in that** said axis (A2) is perpendicular to said first axis (A1).

3. Flight control combiner (1) according to any one of claims 1 to 2,
**characterised in that** said first plane (P1) is perpendicular to said first axis (A1).

4. Flight control combiner (1) according to any one of claims 1 to 3,
**characterised in that** said first articulation (11) is a ball joint.

5. Flight control combiner (1) according to any one of claims 1 to 4,
   **characterised in that** said second articulation (12) and said third articulation (13) are ball joints.

6. Flight control combiner (1) according to any one of claims 1 to 5,
   **characterised in that** said first lever (6) moves substantially perpendicular to said second axis (A2).

7. Flight control combiner (1) according to any one of claims 1 to 6,
   **characterised in that** said second lever (7) moves substantially parallel to said second axis (A2).

8. Flight control combiner (1) according to any one of claims 1 to 7,
   **characterised in that** said first lever (6) extends in the direction of said first axis (A1) and moves substantially in said direction of said first axis (A1).

9. Flight control combiner (1) according to any one of claims 1 to 8,
   **characterised in that** said first lever (6) provides said first flight control order and said second lever (7) provides said second flight control order, said third lever (8) providing a third flight control order combining said first flight control order and said second flight control order.

10. Rotary wing aircraft (20) comprising a first flight control means, a second flight control means and a combiner (1), said first flight control means providing a first flight control order and said second flight control means providing a second flight control order, said combiner (1) combining said first flight control order and said second flight control order,
    **characterised in that** said flight control combiner (1) is according to any one of claims 1 to 9, said first flight control means being connected to said first lever (6) and said second flight control means being connected to said second lever (7).

11. Aircraft (20) according to claim 10,
    **characterised in that**, said aircraft (20) comprising a fuselage (21), a main rotor (22) provided with first blades (23) and two propulsive propellers (25) provided with second blades (26) situated on one side and the other side of said fuselage (21), said first flight control means controls an identical variation of the collective pitch of said second blades (26) of said propulsive propellers (25) and said second flight control means controls a differential variation of said collective pitch of said second blades (26) of said propulsive propellers (25) so that said third control lever (8) controls said differential collective pitch of said propulsive propellers (23) taking into account said identical variation of said collective pitch of said second blades (26) of said propulsive blades (26).

# Fig.1

Fig.2

Fig.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2476013
- FR 1132452
- FR 2946316
- FR 2946317
- FR 2946318
- US 2818746 A